(19) Europäisches Patentamt
European Patent Office
Office européen des brevets

(11) EP 2 807 655 B1

(12) EUROPEAN PATENT SPECIFICATION

(45) Date of publication and mention of the grant of the patent:
**07.03.2018 Bulletin 2018/10**

(21) Application number: **13701259.7**

(22) Date of filing: **24.01.2013**

(51) Int Cl.:
***H01B 3/44*** *(2006.01)*

(86) International application number:
**PCT/EP2013/051374**

(87) International publication number:
**WO 2013/110727 (01.08.2013 Gazette 2013/31)**

(54) **COPOLYMERS FOR WIRE AND CABLE APPLICATIONS**

COPOLYMERE FÜR DRAHT- UND KABELANORDNUNGEN

COPOLYMÈRES POUR APPLICATIONS DE FILS ET DE CÂBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2012 EP 12152737**

(43) Date of publication of application:
**03.12.2014 Bulletin 2014/49**

(73) Proprietor: **Ineos Europe AG**
**1180 Rolle (Vaud) (CH)**

(72) Inventors:
- **JAN, Dominique**
  **4052 Beaufays (BE)**
- **LAMBERT, Yves-Julien**
  **1325 Chaumont-Gistoux (BE)**

(74) Representative: **Hawkins, David George**
**Mathisen & Macara LLP**
**Communications House**
**South Street**
**Staines-upon-Thames, Middx TW18 4PR (GB)**

(56) References cited:
**WO-A2-02/085954**
**US-A1- 2004 024 138**
**US-B1- 6 270 856**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 807 655 B1

## Description

### Field of the invention

The present invention relates to a power wire or cable comprising polyethylene compositions prepared by use of a single site catalyst system and in particular to copolymers of ethylene and $\alpha$-olefins prepared by use of metallocene catalyst systems. The polyethylene compositions deliver a unique combination of mechanical properties, curing efficiency and processing behaviour. They are particularly suitable for insulating layers in low and medium voltage applications as well as for jacketing layers.

### Background of the invention

As a result of it's excellent dielectric properties (dielectric constants and power factors), polyethylene can be used in many electrical applications and electrical devices. In wire and cable extrusion processes, the polyethylene base resin is usually cross-linked during the extrusion in order to improve the tensile strength and the heat deformation resistance of the base resin.

A large variety of polyethylene materials are used in power and telecom cables as insulating layers, semiconducting layers or coating layers.

On the one hand, linear low density polyethylenes (LLDPEs) having a density from 920 to 930 kg/$m^3$ are widely used as insulating layers for low voltage wire and cable. On the other hand, high pressure radical low density polyethylenes (LDPEs) having a density from 910 to 930 kg/$m^3$ are the materials of choice for insulating layers in higher voltage applications providing that they exhibit a high cleanliness level. Elastomeric compounds such as those based on ethylene-propylene rubbers (EPR) and ethylene-propylene-diene terpolymers (EPDM) are also advantageously used as insulating layers for applications that required improved resistance to water treeing phenomena, but the dissipation factor of EPDM materials is usually significantly higher than that of cross-linked polyethylene.

Apart from insulating applications, ethylene compositions such as LLDPE, medium density polyethylenes (MDPE, density from 930 to 940 kg/$m^3$) or high density polyethylenes (density higher than 940 kg/m3) are commonly used as jacketing layers for the protection of wires and cables.

Compounds based on ethylene-acrylate copolymers like ethylene butyl acrylate copolymers (EBA) are mostly used as semi-conducting layers.

Since its commercial introduction in the mid-1990's, metallocene-based copolymers have been extensively studied for film applications.

Regarding wire and cable applications, the use of metallocene-based plastomers and elastomers in place of regular Ziegler-based EPDM in filled insulation compositions has been disclosed in US 6,825,253. When used in combination with particular antioxidant systems, an improved protection against thermal ageing and a better cure state were claimed. Alternatively, blended compositions comprising a metallocene elastomer and a vinyl-norbornene based EPDM terpolymer have been used for insulating layer in EP 1453866.

US 6,534,119 has reported metallocene-based thermoplastic compositions yielding suitable article surface aspect while retaining electrical insulating properties, tensile strength and wear resistance of the resulting cable. The compositions were obtained by use of bis(cyclopentadienyl)zirconium dichloride catalyst systems activated by large amounts of methylaluminoxane as cocatalyst. No improvements in extrudability or resin cleanliness were reported over prior art compositions.

US 2004/0024138 describes crosslinkable copolymers suitable for electrical applications prepared from bis(indenyl) metallocene catalyst systems. The copolymers have $I_{21}/I_2$ ratios in the range 30 - 80 and are exemplified by copolymers having relatively low melt indices $MI_2$ from 0.5 to 2 g/10min.

US 6270856 describes copolymers suitable for use in electric power cable applications also prepared from bis(cyclopentadienyl) metallocene catalysts systems. Exemplified copolymers are those having densities in the range 0.880 - 0.900 g/$cm^3$, Such polyethylene plastomer materials usually contain a large fraction of comonomer and are characterised by relatively poor tensile properties like, for instance, tensile stress at break.

WO 2002/085954 describes power cable coating comprising blends of metallocene derived copolymers and Ziegler-Natta elastomeric terpolymers. Exemplified copolymers also had densities of about 0 880 g/$cm^3$. US 2008/0106005 also describes blends compositions a low density modifier (typically a metallocene elastomeric polymer) and a "classical" mLLDPE or a HDPE to the benefit of improved film performance.

Imai *(Conference on Electrical Insulation and dielectric phenomena - Annual Report, 2002, 963-966*) has also suggested that the particular microstructure of metallocene-based LLDPE could be beneficial to 5treeing resistance since the more homogeneous composition compared to regular Ziegler-based LLDPE would result in longer times for tree propagation.

Blends of mLLDPE with up to 50 wt% of high pressure radical LDPE were also described in US 5,596,392 for

jacketing applications with improved mechanical properties and abrasion resistance compared to Ziegler-based LLDPE.

The use of a particular process for the cross-linking of compositions containing high density polyethylene (HDPE) was reported in US 5,962,592, and an easier cross-linkability of metallocene HDPE compared to Ziegler-based product was claimed.

In our earlier application WO2006/120418, we have disclosed particular polyethylene compositions characterized by melt-index ($MI_{2.16}$ at 190°C) higher than 4 g/10 min and densities greater than 930 kg/$m^3$ which have been found to exhibit high resistance to environmental stress-cracking. The disclosed compositions were found to be particularly suitable for rotomolding applications.

In addition, polyethylene compositions, disclosed in WO 2010/000557, having melt index from 0.1 to 3.5 g/10 min and density from 930 to 960 kg/m3 have been found to exhibit high resistance at high temperature provided that a particular single-site catalyst system is used for their preparation. Such superior properties particularly beneficial to hydrostatic pressure resistance at high temperatures in hot and cold pipe applications were disclosed in WO2010/000557.

We have now found that copolymers of ethylene and $\alpha$-olefins of defined density and melt index have particular advantages for use in insulating or jacketing layers for wire or cable applications. In particular use of the copolymers of the present invention may result in excellent extrudability, even better than the state-of-the-art LLDPE compositions, to the benefit of higher output rate (line speed) and/or lower energy consumption during the extrusion process. In addition improved flexibility, mechanical properties and environmental stress crack resistance (ESCR) may be achieved in comparison with Ziegler produced LLDPE

Good cross-linkability, excellent resistance to heat deformation and superior cleanliness due to the low concentration in catalyst residues (particularly chlorine) may also be observed as equivalent or better than Ziegler produced LLDPE and may also be equivalent to clean LDPE.

The use of the copolymers of the present invention also provides the possibility to use powders rather than pellets to achieve a better dispersion of the liquid cross-linking agent since the powders have suitable particle size distribution, allowing for free flowing powders, and porosity which may allow for the up to 10 % Wt of liquid inclusion while still remaining free flowing.

## Detailed description

Thus according to a first aspect of the present invention there is provided an insulating or a jacketing layer for wire or cable comprising as a base resin a copolymer of ethylene and alpha-olefin having the following properties as determined on said base resin prior to any reticulation or crosslinking:

(i) a density in the range 0.912 to 0.936 g.$cm^{-3}$,
(ii) a melt index (190°C/2.16 kg), $MI_2$ from 4 to 8 g/10min, and
(iii) a comonomer distribution branch index (CDBI) of > 60%.

The copolymers of the present invention have a density in the range 0.912 to 0.936 g.$cm^{-3}$ and preferably in the range 0.914 - 0.930 g/$cm^{-3}$.

The copolymers of the present invention preferably have a melt index ($MI_2$) in the range 4.5 - 6.0.

The copolymers of the present invention preferably have a CDBI in the range 60 - 95% and preferably in the range 70 - 90%.

The copolymers of the present invention have a melt index ratio ($I_{21}/I_2$) in the range 19 - 29, preferably in the range 19 - 27 and most preferably in the range 20 - 25.

The copolymers of the present invention have a melt elastic modulus G'(G'=500 Pa) in the range 20 - 50 Pa, preferably in the range 22 - 46 and most preferably in the range 22 - 32.

The copolymers of the present invention have a Dow Rheology Index (DRI) in the range 0.05 - 0.40, preferably in the range 0.10 - 0.35 and most preferably in the range 0.10 - 0.30.

The copolymers of the present invention may typically exhibit a high shear rate viscosity $\eta^*_{100}$(190°C) lower than 800 Pas., preferably in the range 400 - 800 Pas and most preferably in the range 600 - 800 Pas.

The copolymers of the present invention may typically exhibit a comonomer partitioning function (Cpf) of > 1.0, preferably > 1.1 and most preferably > 1.2. Preferably the copolymers exhibit a Cpf < 2 and most preferably < 1.6. The most preferred range for Cpf is 1.2 - 1.6. The Cpf parameter is well documented in our earlier application WO 9744371.

In another embodiment, these copolymers are charaterised by a particularly advantageous balance between softness, illustrated for instance by a low flexural modulus (FlexMod), and toughness, illustrated for instance by a high tensile strength at break (TSB). The copolymers of the present invention may typically exhibit FlexMod and TSB wherein:

TSB (MPa) > 0.012 x FlexMod (MPa) + 14.5, and preferably wherein
TSB (MPa) > 0.012 x FlexMod (MPa) + 15.5

The insulating or jacketing layer of the present invention comprises copolymers of ethylene and alpha-olefins. Preferred alpha-olefins comprise C4 - C12 carbon atoms. Most preferred alpha-olefin is 1-hexene.

The cleanliness of the polyethylene base resin is usually a key attribute for wire and cable insulating layer since any inorganic contamination or corrosive character may limit the application voltage of a cable. The contaminations in polyethylene materials can come from the polymerisation reactor, the pelletisation step, downstream of the extruder during transfer or packing operations or from the catalytic system itself. Most of the linear low density polyethylenes used as insulating layers for electrical cables are characterised by relatively high content in catalyst residues like transition metal salts and chlorinated molecules, thus limiting the usage to low voltage cables (eg. lower than 3 kV).

Accordingly the copolymers of the present invention preferably have a chlorine content less than 10 ppm by weight, and more preferably less than 6 ppm by weight.

In another embodiment of the present invention the ethylene alpha-olefin copolymers comprising the base resin are preferably cross-linked in a reticulation process that can be selected among an organic peroxide cross-linking process, a silane/peroxide grafting and cross-linking process, and an electron beam cross-linking process.

The copolymers of the present invention are preferably cross-linked via a silane/peroxide grafting and cross-linking process.

For instance, a two-step extrusion process (known as Sioplas process) involving first the grafting of vinylsilane moiety on polyethylene to form a "compound", then the coating on the wire or cable and cross-linking in the presence of moisture can be used.

Alternatively, a one-step extrusion process known as Monosil process can also be advantageously be applied. In this process, grafting and extrusion of the cable are performed on the same extrusion equipment followed by a reticulation in the presence of moisture.

Suitable cross-linking agents include the mixtures of peroxides (preferably dicumylperoxide) with vinylalkoxysilane (for example vinyltrimethoxysilane). The cross-linking agent may also contain an organometallic tin compound like dibutyltin derivatives which acts as a "cross-linking catalyst" after the extrusion process.

Preferred cross-linking agent concentrations are in the range 0.1 to 2 wt% , preferably from 0.5 to 1.5 wt%, and most preferably from 0.7 to 1.4 wt%.

In some extrusion processes used for the manufacture of wire or cable, the dispersion of the liquid cross-linking agent is improved by pre-dispersing the reactant in a fraction of powder of the base ethylene copolymer. This usually results in a higher efficiency of the grafting or cross-linking reaction to the benefit of a lower usage of cross-linking agent.

Thus, in another embodiment of the present invention, the insulating or jacketing layer may be produced from the ethylene alpha-olefin copolymer in a powder form collected straight from reactor, without preliminary compounding step. The ethylene alpha-olefin may be partially or totally in a powder form.

## Catalyst

The copolymers of the present invention are most suitably prepared by use of a single-site catalyst system.

The copolymers of component (a) of the present invention may typically be prepared by use of catalyst systems comprising transition metal compounds. The transition metal compounds may be used in the presence of a suitable cocatalyst and may be supported.

A preferred catalyst system for making the polyethylene copolymers utilised in the invention is a metallocene catalyst system comprising a monocyclopentadienylmetallocene complex having a 'constrained geometry' configuration together with a suitable activator. Examples of such monocyclopentadienyl or substituted monocyclopentadienyl complexes are described in EP 416815A, EP 418044A, EP 420436A and EP 551277A. This type of catalyst system is known to exhibit high activity and to give relatively low catalyst residues in the final resin. Low levels of transition metal residues and chlorine is an advantage for the wire and cable applications since such contaminations may affect the dielectric properties, the overall insulation performance as well as the ageing of the polyethylene material.

Particularly suitable monocyclopentadienyl or substituted monocyclopentadienyl complexes may be represented by the general formula $CpMX_n$ wherein Cp is a single cyclopentadienyl or substituted cyclopentadienyl group optionally covalently bonded to M through a substituent, M is a Group IVB metal bound in a $\eta^5$ bonding mode to the cyclopentadienyl or substituted cyclopentadienyl group, X each occurrence is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms or optionally one X together with Cp forms a metallocycle with M and n is dependent upon the valency of the metal.

Preferred monocyclopentadienyl complexes have the formula:

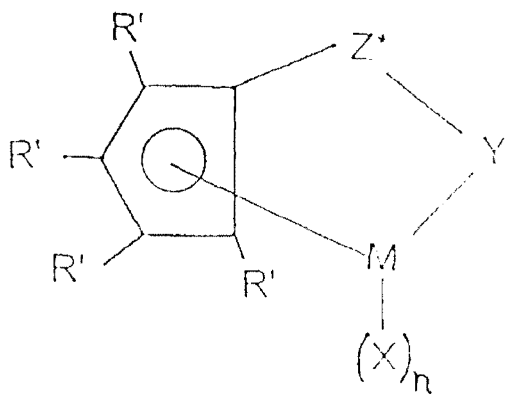

wherein:-

R' in each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms,
Y is -O-, -S-, -NR*-, -PR*-,
M is hafnium, titanium or zirconium,
Z* is $SiR^*_2$, $CR^*_2$, $SiR^*_2SiR^*_2$, $CR^*_2CR^*_2$, CR*=CR*, $CR^*_2SiR^*_2$, or

$GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.,
and n is 1 or 2 depending on the valence of M.

Examples of suitable monocyclopentadienyl complexes are (tert-butylamido) dimethyl (tetramethyl-$\eta^5$-cyclopentadienyl) silanetitanium dichloride and (2-methoxyphenylamido) dimethyl (tetramethyl--$\eta^5$-cyclopentadienyl) silanetitanium dichloride.

Particularly preferred metallocene complexes for use in the preparation of the copolymers of the present invention may be represented by the general formula:

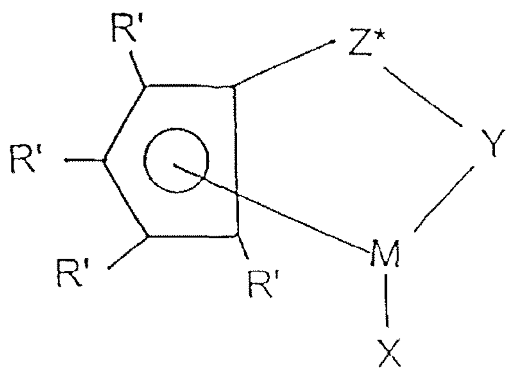

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen,

halo or cyano) together form a divalent derivative thereof connected to adjacent positions of the cyclopentadienyl ring to form a fused ring structure;

X is a neutral $\eta^4$ bonded diene group having up to 30 non-hydrogen atoms, which forms a $\eta$-complex with M;

Y is -O-, -S-, -NR*-, -PR*-,

M is titanium or zirconium in the + 2 formal oxidation state;

Z* is $SiR^*_2$, $CR^*_2$, $SiR^*_2SiR^*_2$, $CR^*_2CR^*_2$, CR*=CR*, $CR^*_2SiR^*_2$, or $GeR^*_2$, wherein:

R* each occurrence is independently hydrogen, or a member selected from hydrocarbyl, silyl, halogenated alkyl, halogenated aryl, and combinations thereof, said

R* having up to 10 non-hydrogen atoms, and optionally, two R* groups from Z* (when R* is not hydrogen), or an R* group from Z* and an R* group from Y form a ring system.

Examples of suitable X groups include s-trans-$\eta^4$-1,4-diphenyl-1,3-butadiene, s-trans-$\eta^4$-3-methyl-1,3-pentadiene; s-trans-$\eta^4$-2,4-hexadiene; s-trans-$\eta^4$-1,3-pentadiene; s-trans-$\eta^4$-1,4-ditolyl-1,3-butadiene; s-trans-$\eta^4$-1,4-bis(trimethylsilyl)-1,3-butadiene; s-cis-$\eta^4$-3-methyl-1,3-pentadiene; s-cis-$\eta^4$-1,4-dibenzyl-1,3-butadiene; s-cis-$\eta^4$-1,3-pentadiene; s-cis-$\eta^4$-1,4-bis(trimethylsilyl)-1,3-butadiene, said s-cisdiene group forming a $\eta$-complex as defined herein with the metal.

Most preferably R' is hydrogen, methyl, ethyl, propyl, butyl, pentyl, hexyl, benzyl, or phenyl or 2 R' groups (except hydrogen) are linked together, the entire

$C_5R'_4$ group thereby being, for example, an indenyl, tetrahydroindenyl, fluorenyl, terahydrofluorenyl, or octahydrofluorenyl group.

Highly preferred Y groups are nitrogen or phosphorus containing groups containing a group corresponding to the formula -N(R")- or -P(R")- wherein R"is $C_{1-10}$hydrocarbyl.

Most preferred complexes are amidosilane - or amidoalkanediyl complexes.

Most preferred complexes are those wherein M is titanium.

Specific complexes which may be used are those disclosed in WO 95/00526 and these are incorporated herein by reference. A particularly preferred complex is (t-butylamido) (tetramethyl-$\eta^5$-cyclopentadienyl) dimethyl silanetitanium -$\eta^4$-1.3 - pentadiene.

Suitable cocatalysts for use in the preparation of the novel copolymers of the present invention are those typically used with the aforementioned metallocene complexes. These include aluminoxanes such as methyl aluminoxane (MAO), boranes such as tris(pentafluorophenyl) borane and borates.

Aluminoxanes are well known in the art and preferably comprise oligomeric linear and/or cyclic alkyl aluminoxanes. Aluminoxanes may be prepared in a number of ways and preferably are prepare by contacting water and a trialkylaluminium compound, for example trimethylaluminium, in a suitable organic medium such as benzene or an aliphatic hydrocarbon. A preferred aluminoxane is methyl aluminoxane (MAO).

Other suitable cocatalysts are organoboron compounds in particular triarylboron compounds. A particularly preferred triarylboron compound is tris(pentafluorophenyl) borane.

Other compounds suitable as cocatalysts are compounds which comprise a cation and an anion. The cation is typically a Bronsted acid capable of donating a proton and the anion is typically a compatible non-coordinating bulky species capable of stabilizing the cation.

Such cocatalysts may be represented by the formula:

$$(L^*\text{-}H)^{d+}\ (A^{d-})$$

wherein:-

L* is a neutral Lewis base

$(L^*\text{-}H)+_d$ is a Bronsted acid

$A^{d-}$ is a non-coordinating compatible anion having a charge of d-, and

d is an integer from 1 to 3.

The cation of the ionic compound may be selected from the group consisting of acidic cations, carbonium cations, silylium cations, oxonium cations, organometallic cations and cationic oxidizing agents.

Suitably preferred cations include trihydrocarbyl substituted ammonium cations eg. triethylammonium, tripropylammonium, tri(n-butyl)ammonium and similar. Also suitable are N.N-dialkylaniliniumcations such as N,N-dimethylanilinium cations.

The preferred ionic compounds used as cocatalysts are those wherein the cation of the ionic compound comprises a hydrocarbyl substituted ammonium salt and the anion comprises an aryl substituted borate.

Typical borates suitable as ionic compounds include:

triethylammoniumtetraphenylborate
triethylammoniumtetraphenylborate,
tripropylammoniumtetraphenylborate,
tri(n-butyl)ammonium tetraphenylborate,
tri(t-butyl)ammonium tetraphenylborate,
N,N-dimethylaniliniumtetraphenylborate,
N,N-diethylaniliniumtetraphenylborate,
trimethylammoniumtetrakis(pentafluorophenyl) borate,
triethylammoniumtetrakis(pentafluorophenyl) borate,
tripropylammoniumtetrakis(pentafluorophenyl) borate,
tri(n-butyl)ammonium tetrakis(pentafluorophenyl) borate,
N,N-dimethylaniliniumtetrakis(pentafluorophenyl) borate,
N,N-diethylaniliniumtetrakis(pentafluorophenyl) borate.

A preferred type of cocatalyst suitable for use with the metallocene complexes comprise ionic compounds comprising a cation and an anion wherein the anion has at least one substituent comprising a moiety having an active hydrogen.

Suitable cocatalysts of this type are described in WO 98/27119 the relevant portions of which are incorporated herein by reference.

Examples of this type of anion include:

triphenyl(hydroxyphenyl) borate
tri (p-tolyl)(hydroxyphenyl) borate
tris (pentafluorophenyl)(hydroxyphenyl) borate
tris (pentafluorophenyl)(4-hydroxyphenyl) borate

Examples of suitable cations for this type of cocatalyst include triethylammonium, triisopropylammonium, diethylmethylammonium, dibutylethylammonium and similar.

Particularly suitable are those cations having longer alkyl chains such as dihexyldecylmethylammonium, dioctadecylmethylammonium, ditetradecylmethylammonium, bis(hydrogentated tallow alkyl) methylammonium and similar.

Particular preferred cocatalysts of this type are alkylammonium tris(pentafluorophenyl) 4-(hydroxyphenyl) borates. A particularly preferred cocatalyst is bis(hydrogenated tallow alkyl) methyl ammonium tris (pentafluorophenyl) (4-hydroxyphenyl) borate.

With respect to this type of cocatalyst , a preferred compound is the reaction product of an alkylammoniumtris(pentaflurophenyl)-4-(hydroxyphenyl) borate and an organometallic compound, for example triethylaluminium or an aluminoxane such as tetraisobutylaluminoxane.

The catalysts used to prepare the novel copolymers of the present invention may suitably be supported.

Suitable support materials include inorganic metal oxides or alternatively polymeric supports may be used for example polyethylene, polypropylene, clays, zeolites, etc.

The most preferred support material for use with the supported catalysts according to the method of the present invention is silica. Suitable supports are silicas having a median diameter (d50) from 20 to 70 μm, preferably from 30 to 60 μm. Particularly suitable supports of this type are Grace Davison D948 or Sylopol 2408 silicas as well as PQ Corporation ES70W or ES757 silica.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere under reduced pressure.

The porous supports are preferably pretreated with an organometallic compound preferably an organoaluminium compound and most preferably a trialkylaluminium compound in a dilute solvent.

The support material is pretreated with the organometallic compound at a temperature of -20°C to 150°C and preferably at 20°C to 100°C.

Particularly suitable catalysts for use in the preparation of the polyethylene powders of the present invention are metallocene complexes which have been treated with polymerisable monomers. Our earlier applications WO 04/020487 and WO 05/019275 describe supported catalyst compositions wherein a polymerisable monomer is used in

the catalyst preparation. Polymerisable monomers suitable for use in this aspect of the present invention include ethylene, propylene, 1-butene, 1-hexene, 1-octene, 1-decene, styrene, butadiene, and polar monomers for example vinyl acetate, methyl methacrylate, etc. Preferred monomers are those having 2 to 10 carbon atoms in particular ethylene, propylene, 1-butene or 1-hexene. Alternatively a combination of one or more monomers may be used for example ethylene/1-hexene. The preferred polymerisable monomer is 1-hexene.

The polymerisable monomer is suitably used in liquid form or alternatively may be used in a suitable solvent. Suitable solvents include for example heptane.

The polymerisable monomer may be added to the cocatalyst before addition of the metallocene complex or alternatively the complex may be pretreated with the polymerisable monomer.

## Process

The novel copolymers of the present invention may suitably be prepared in processes performed in either the slurry or the gas phase.

A slurry process typically uses an inert hydrocarbon diluent and temperatures from about 0°C up to a temperature just below the temperature at which the resulting polymer becomes substantially soluble in the inert polymerisation medium. Suitable diluents include toluene or alkanes such as hexane, propane or isobutane. Preferred temperatures are from about 30°C up to about 200°C but preferably from about 60°C to 100°C. Loop reactors are widely used in slurry polymerisation processes.

The novel copolymers are most suitably prepared in a gas phase process. Gas phase processes for the polymerisation of olefins, especially for the homopolymerisation and the copolymerisation of ethylene and $\alpha$-olefins for example 1-butene, 1-hexene, 4-methyl-1-pentene are well known in the art.

Typical operating conditions for the gas phase are from 20°C to 100°C and most preferably from 40°C to 85°C with pressures from sub-atmospheric to 100 bar.

Particularly preferred gas phase processes are those operating in a fluidised bed. Examples of such processes are described in EP 89691A and EP 699213A, with the latter being a particularly preferred process.

The copolymers of the present invention are most suitable for use in insulating or jacketing layers for wire and cable applications.

The copolymers are particularly suitable for insulating layers in low and medium voltage applications.

Thus according to another aspect of the present invention there is provided a wire or cable or similar having an insulating or jacketing layer as hereinbefore described.

Suitable uses for the insulating or jacketing layers of the present invention are ion cable applications such as telecommunications, power, fibre optics and similar.

The present invention will now be suitably described by use of the following examples:

## Examples

### Methods of test (polymers)

Melt index: $MI_2$ (190°C/2.16 kg) and HLMI (190°C/21.6 kg) were measured in accordance with the procedures of ISO 1133 at 190°C using loads of 2.16 kg and 21.6 kg, respectively.

Density of the polyethylene was measured according to ISO 1183-1 (Method A) and the sample plaque was prepared according to ASTM D4703 (Condition C) where it was cooled under pressure at a cooling rate of 15°C/min from 190°C to 40°C.

Dynamic rheological measurements are carried out, according to ASTM D 4440, on a dynamic rheometer (e.g., ARES) with 25 mm diameter parallel plates in a dynamic mode under an inert atmosphere. For all experiments, the rheometer has been thermally stable at 190°C for at least 30 minutes before inserting the appropriately stabilised (with anti-oxidant additives), compression-moulded sample onto the parallel plates. The plates are then closed with a positive normal force registered on the meter to ensure good contact. After about 5 minutes at 190°C, the plates are lightly compressed and the surplus polymer at the circumference of the plates is trimmed. A further 10 minutes is allowed for thermal stability and for the normal force to decrease back to zero. That is, all measurements are carried out after the samples have been equilibrated at 190°C for about 15 minutes and are run under full nitrogen blanketing.

Two strain sweep (SS) experiments are initially carried out at 190°C to determine the linear viscoelastic strain that would generate a torque signal which is greater than 10% of the lower scale of the transducer, over the full frequency (e.g. 0.01 to 100 rad/s) range. The first SS experiment is carried out with a low applied frequency of 0.1 rad/s. This test is used to determine the sensitivity of the torque at low frequency. The second SS experiment is carried out with a high applied frequency of 100 rad/s. This is to ensure that the selected applied strain is well within the linear viscoelastic region of the polymer so that the oscillatory rheological measurements do not induce structural changes to the polymer

during testing. In addition, a time sweep (TS) experiment is carried out with a low applied frequency of 0.1 rad/s at the selected strain (as determined by the SS experiments) to check the stability of the sample during testing.

Measurement of Melt Elastic Modulus G'(G"=500 Pa) at 190°C:

The frequency sweep (FS) experiment is then carried out at 190°C using the above appropriately selected strain level and the dynamic rheological data thus measured are then analysed using the rheometer software (viz., Rheometrics RHIOS V4.4 or Orchestrator Software) to determine the melt elastic modulus G'(G" = 500 Pa) at a constant, reference value (500 Pa) of melt viscous modulus (G").

The high shear viscosity ($\eta$*100) is characterised by the viscosity measured at the applied frequency of 100 rad/s.

Zero Shear Viscosity (ZSV) and Dow Rheology Index (DRI)

To characterize the rheological behavior of substantially linear ethylene polymers, S Lai and G. W. Knight introduced (ANTEC '93 Proceedings, Insite (TM) Technology Polyolefins (ITP)-New Rules in the Structure/Rheology Relationship of Ethylene &-Olefin Copolymers, New Orleans, La., May 1993) a new rheological measurement, the Dow Rheology Index **(DRI)** which expresses a polymer's "normalized relaxation time as the result of long chain branching". S. Lai et al; (Antec '94, Dow Rheology Index (DRI) for Insite(TM) Technology Polyolefins (ITP): Unique structure-Processing Relationships, pp. 1814-1815) defined the **DRI** as the extent to which the rheology of ethylene-octene copolymers known as ITP (Dow's Insite Technology Polyolefins) incorporating long chain branches into the polymer backbone deviates from the rheology of the conventional linear homogeneous polyolefins that are reported to have no Long Chain Branches (LCB) by the following normalized equation:

$$DRI = [365000\ (\tau_0/\eta_0) - 1]/10$$

wherein $\tau_0$ is the characteristic relaxation time of the material and $\eta_0$ is the zero shear viscosity of the material. The DRI is calculated by least squares fit of the rheological curve (dynamic complex viscosity versus applied frequency e.g., 0.01 - 100 rads/s) as described in U.S. Pat. No. 6,114,486 with the following generalized Cross equation, i.e.

$$\eta(\omega) = \eta_0/[1+(\omega\cdot\tau_0)^n]$$

Wherein n is the power law index of the material, $\eta(\omega)$ and $\omega$ are the measured complex viscosity and applied frequency data respectively.

High Temperature Gel Permeation (Size Exclusion) Chromatography Analysis by Calibration (Classical GPC) for Apparent Molecular Weight Distribution Determination

Apparent molecular weight distribution and associated averages, uncorrected for long chain branching, were determined by Gel Permeation (or Size Exclusion) Chromatography using a Waters 150CV, with 4 Waters HMW 6E columns and a differential refractometer detector. The solvent used was 1,2,4 Trichlorobenzene at 135°C, which is stabilised with BHT, of 0.2 g/litre concentration and filtered with a 0.45$\mu$m Osmonics Inc. silver filter. Polymer solutions of 1.0 g/litre concentration were prepared at 160°C for one hour with stirring only at the last 30 minutes. The nominal injection volume was set at 400$\mu$l and the nominal flow rate was 1 ml/min.

A relative calibration was constructed using 13 narrow molecular weight linear polystyrene standards:

| PS Standard | Molecular Weight |
|---|---|
| 1 | 7 520 000 |
| 2 | 4 290 000 |
| 3 | 2 630 000 |
| 4 | 1 270 000 |
| 5 | 706 000 |
| 6 | 355 000 |

(continued)

| PS Standard | Molecular Weight |
|---|---|
| 7 | 190 000 |
| 8 | 114 000 |
| 9 | 43 700 |
| 10 | 18 600 |
| 11 | 10 900 |
| 12 | 6 520 |
| 13 | 2 950 |

The elution volume, V, was recorded for each PS standards. The PS molecular weight was then converted to PE equivalent using the following Mark Houwink parameters $\mathbf{k}_{ps}$ =1.21 x $10^{-4}$ ml.$g^{-1}$, $\alpha_{ps}$= 0.707, $\mathbf{k}_{pe}$= 4.06 x $10^{-4}$ ml.$g^{-1}$, □$_{pe}$= 0.725. The calibration curve Mw $_{PE}$ = f(V) was then fitted with a first order linear equation. All the calculations are done with Millennium 3.2 software from Waters.

**Determination of $C_{pf}$**

(a) Comonomer or Short Chain Branching (SCB) Distribution by GPC/FTIR

Measurement of Comonomer (SCB) Content vs. Molecular Weight

The comonomer content as a function of molecular weight was measured by coupling a Nicolet ESP protégé 460 Fourier transform infrared spectrometer (FTIR) to Polymer Laboratories (PL 210) Gel Permeation Chromatograph (GPC) with a transfer line thermally controlled at 160°C. The setting up, calibration and operation of this system together with the method for data treatment are summarised below:

Preparation of polymer solution (in a heat block with constant agitation) :

- ◦ Polymer Concentration: 2 g/l (20 mg in a vial of 10 ml)
- ◦ Solvent: 1,2,4 trichlorobenzene « dry » of Biosolve and stabilized with BHT (ionol CP) at 0.2 g/l
- ◦ Dissolution temperature: 160 °C
- ◦ Duration : 1 h (30 minutes without agitation and 30 minutes with agitation at 150 revolutions/minute)

GPC Conditions (PL 210 Polymer Laboratories)

- ◦ Columns set: 2 PL mixed-B (30 cm length 30; 10 μm beads; 5 μm sintered)
- ◦ Mobile Phase: 1,2,4 trichlorobenzene « dry » of Biosolve and non-stabilised
- ◦ Oven Temperature: 160 °C
- ◦ Flow rate : 1 ml/ min
- ◦ Injection Volume: 500 μl
- ◦ Transfer line temperature: 160 °C.

FTIR (Nicolet Protégé 460) Spectrometer

Flow cell commercialised by PL Laboratories and placed inside the Nicolet spectrometer:

- ◦ Flow cell volume: 70 μl
- ◦ Flow cell path: 1 mm
- ◦ Flow cell window : calcium fluoride
- ◦ FTIR Detector: InSb cooled by liquid nitrogen
- ◦ Number of scan : 16
- ◦ Resolution : 4 $cm^{-1}$

◦ Spectral Range : 3000 to 2700 $cm^{-1}$

Software

Software acquisition spectres: OMNIC (version 6.0) from Thermo-Nicolet Software exploitation: CIRRUS from Polymer Laboratories (Cirrus GPC/multidetector 2001-2003).

Calibration

The apparent molecular weights, and the associated averages and distribution, uncorrected for long chain branching, were determined by Gel Permeation Chromatography using a PL210, with 2 PL mixed-B and a FTIR (InSb) detector. The solvent used was 1,2,4 Trichlorobenzene at 160°C, which is stabilised with BHT, of 0.2g/litre concentration and filtered with a 0.45μm Osmonics Inc. silver filter. Polymer solutions of 2.0 g/litre concentration were prepared at 160°C for one hour with stirring only at the last 30 minutes. The nominal injection volume was set at 500μl and the nominal flow rate was 1 ml/min.
A relative calibration was constructed using 10 narrow molecular weight linear polystyrene standards:

| PS Standard | Molecular Weight |
|---|---|
| 1 | 7 500 000 |
| 2 | 2 560 000 |
| 3 | 841 700 |
| 4 | 280 500 |
| 5 | 143 400 |
| 6 | 63 350 |
| 7 | 31 420 |
| 8 | 9 920 |
| 9 | 2 930 |
| 10 | 580 |

The elution volume, V, was recorded for each PS standards. The PS molecular weight was then converted to PE equivalent using the following Mark Houwink parameters $k_{ps}$ =1.21 x $10^{-4}$, $\alpha_{ps}$= 0.707, $k_{pe}$= 3.92x $10^{-4}$, $\square_{pe}$ = 0.725. The calibration curve Mw $_{PE}$ = f(V) was then fitted with a first order linear equation.

Calibration IR for Short Chain Branching (SCB)

The chemometric model employed within the Polymer Laboratories Softwares (e.g., CIRRUS, GPC/Multidetector) involved the calibration of the FTIR detector using Standards, including the following:

| Standard | $CH_3$/1000 C |
|---|---|
| CF24-7 | 15.4 |
| CF24-10 | 11.1 |
| CF 25-24 | 9.4 |
| CF25-1 | 1.3 |
| CF25-3 | 2.7 |
| CF25-5 | 3.7 |
| CF25-6 | 4.2 |

In order to characterize the degree to which the comonomer is concentrated in the high molecular weight part

of the polymer, the GPC/FTIR data were used to calculate a parameter named comonomer partitioning factor, $C_{pf}$.

(b) Comonomer Partitioning Factor ($C_{pf}$)

The comonomer partitioning factor ($C_{pf}$) is calculated from GPC/FTIR data, as has previously been described in WO 97/44371 which is herein incorporated by reference. It characterizes the ratio of the average comonomer content of the higher molecular weight tractions to the average comonomer content of the lower molecular weight fractions. Higher and lower molecular weight are defined as being above or below the median molecular weight respectively, that is, the molecular weight distribution is divided into two parts of equal weight. $C_{pf}$ is calculated from the following Equation:

$$C_{pf} = \frac{\dfrac{\sum_{i=1}^{n} w_i \cdot c_i}{\sum_{i=1}^{n} w_i}}{\dfrac{\sum_{j=1}^{m} w_j \cdot c_j}{\sum_{j=1}^{m} w_j}}$$

where $c_i$ is the mole fraction comonomer content and $w_i$ is the normalized weight fraction as determined by GPC/FTIR for the n FTIR data points above the median molecular weight. $c_j$ is the mole fraction comonomer content and wj is the normalized weight fraction as determined by GPC/FTIR for the m FTIR data points below the median molecular weight. Only those weight fractions, $w_i$ or $w_j$ which have associated mole fraction comonomer content values are used to calculate $C_{pf}$. For a valid calculation, it is required that n and m are greater than or equal to 3. FTIR data corresponding to molecular weight fractions below 5,000 are not included in the calculation due to the uncertainties present in such data.

Determination of CDBI (as Determined by Temperature Rising Elution Fractionation (TREF).

Temperature Rising Elution Fractionation (TREF), as described for example in Wild et al., J. Poly. Sci., Poly. Phys. Ed., vol. 20, p. 441 (1982), is a technique used for the analysis of the comonomer (composition) distribution in semi-crystalline polymers and more specifically for the analysis of the short chain branching distribution (SCBD) in linear low density polyethylene (LLDPE) and tacticity in polypropylene (PP).

In particular, the TREF solubility distribution curve for a copolymer can be readily used to determine a "Composition Distribution Breadth Index" ("CDBI") which has been defined (e.g., in US Patent No. 5206075 and PCT publication WO93/03093) as a measure of composition distribution. The solubility distribution curve is a plot of the weight fraction of the copolymer that is solubilised as a function of temperature. This is then converted to a weight fraction versus composition distribution curve, where the CDBI is determined by establishing the weight percentage of a sample that has comonomer content within 50% of the median comonomer content on each side of the median. It is also commonly assumed that all fractions have Mn □ 15000 in the CDBI measurement for simplifying the correlation of composition with elution temperature.

The TREF apparatus was supplied by the PolymerChar Company with the following components:

- A special oven to perform the crystallization and elution temperature ramps. An Agilent GC 7890 oven which is split in two parts: the top oven (where the Valco valves, a vapor sensor are installed) and the main oven where the five 60 mL vessels as well as the TREF column are installed. The polymer samples are dissolved in these vessels.
- The TREF column, size: 7.8 mm (internal diameter) x 15 cm (length), packed with stainless steal beads (HPLC column).
- An infrared detector.
- A dispenser (25 mL syringe).
- An Agilent Isocratic 1200 series pump.
- A computer with the software developed by PolymerChar to program analysis, for acquisition and data processing.

| Equipment | |
|---|---|
| Column size (mm) | 7.8 (diameter) x 150 (length) |
| Solvent | Trichlorobenzene |
| Packing beads | Stainless steel |
| Detector | IR |
| Wavelength (μm) | 3.42 |
| **Sample preparation** | |
| Concentration of the PE solution (mg/ml) | 3.2 |
| Injected volume on the column (ml) | 0.4 |
| Dissolution temperature (°C) | 150 |
| **Crystallization step** | |
| Temperature range (°C) | 95 - 35 |
| Crystallization rate (°C/min) | 0.5 |
| Annealed time (min) | 20 min at 35°C |
| **Elution step** | |
| Elution rate (ml/min) | 0.5 (continuous) |
| Temperature range (°C) | 35 - 120 |

Tensile properties on the base resin were measured ISO-1BA type specimens machined according to the teachings of ISO2818 standard. The specimens were cut from compressed moulded plaques prepared by compression according to ISO 293:1996 (Plastics. Compression moulding test specimens of thermoplastic materials) using a 'Collin P300M' hydraulic press. Sample moulding program is as followed:

- Application of pressure of 2 bars during 600 seconds. During this period, the mould is heated up to 190°C at a rate of 20°C/min
- A pressure of 50 bars is then applied during 300s at 190°C, then a pressure or 150 bars was applied for a period of 3 min Sample is cooled down at a controlled speed of 15°C/minute under this pressure.
- Samples are removed once the temperature is below 35°C

The specimens were conditioned before the testing for at least 24h at 23°C and 50% relative humidity. A tensile testing machine Hounsfield H10 KS (0.5 kN load cell) was used, and the testing is performed in accordance to ISO 527-1:1993. The gauge length was 58 mm and the distance between the extensometers was 25 mm.

The full strain-stress curve was recorded at a deformation rate of 20 mm/min till the specimen failure. The tensile strength at break and the elongation at break were reported as the arithmetic average of the values obtained for 5 distinct specimens.

Flexural Modulus (FlexMod) was measured on ISO 1BA specimens on a flexion machine Instron 5544 at 23°C and a deformation rate of 2 mm/min. The value reported is the segment modulus [0.05 - 0.25 %] as recommended in ISO 178, and it is obtained from the arithmetic average of the measurements of seven distinct specimens.

Cross-linking of the base resin was performed with 1 wt % of Silcat R (silane cross-linking reagent commercialised by Momentive). 200 g of the dry polyethylene pellets were impregnated with the liquid silane reagent for 1 hour at 80°C. After cooling, the polyethylene composition is grafted during extrusion on a single screw lab extruder. The resulting pellets were then used for compression moulding of plaques according to the procedure described above. The cross-linking is actually performed after immersion of the moulded plaques in hot water (80°C) for 18 hours.
ISO 1BA specimens are cut out of the cross-linked plaques and submitted to the tensile tests disclosed above.

The gels content was determined by an internal method adapted from ISO/DIS 10147. A 200 mg sample of the cross-linked material, in the form of microtomic cuts of about 100 μm, were introduced in a tea ball and submitted

to extraction for 4 hours in 300 mL of boiling m-xylene. The tea ball containing the non-extracted part is then dried for 4 h under vacuum, and the gels content is expressed as a fraction of starting material (in weight %).

Hot Set Test was carried out according to IEC 60811-2-1 (clause 9). The elongation under constant load of 20 $N/mm^2$ after 15 min at 200°C was determined.

Tensile properties of the coated layer were measured using pieces of extruded cables (120 mm length) cross-linked by immersion in a water bath at 80°C for 24 h. After removal of the conducting wire the samples were conditioned before the testing for at least 24h at 23°C and 50% relative humidity.

The tensile test was performed on a Zwick Materialprüfung 1445 equipment (500N load cell) according to the teachings of IEC 60811-1-1 (clauses 9.1 and 8.1.3.2a) before ageing and after ageing in an oven at 135°C during 7 days. The gauge length was 50 mm and the distance between the extensometers was 20 mm.

The strain-stress curve was recorded at a deformation rate of 50 mm/min till the specimen failure. The tensile strength at break and the elongation at break were reported as the arithmetic average of the values obtained for 5 distinct specimens.

## Cable extrusions

The polyethylene compositions were extruded on different equipment to obtain a Low Voltage insulation layer over a bare copper. The details of the extrusion conditions are summarized in the table below.

| **Condition** | | **A** | **B** |
|---|---|---|---|
| Extruder | | Nokia-Maillefer / Monosil | Nokia-Maillefer / Monosil |
| Screw diameter | mm | 120 | 150 |
| Screw L/d | | 30 | 30 |
| Core outside diameter | mm | 1.728 (2.5 $mm^2$) | 1.36 (1.5 $mm^2$) |
| Finish outside diameter | mm | 3.02 | 2.7 |
| Wall thickness | mm | 0.67 | 0.67 |
| Tip outside diameter | mm | 1.82 | 1.4 |
| Die inside diameter | mm | 3.05 | 2.69 |
| Screw temp profile Z1-Z2-Z3-Z4-Z5-Z6 (Z7) | °C | 130-140-150-160-170-190-(195) | 150-160-170-180-190-200 |
| Die temp profile Breaker-head-he ad-die | °C | 205-220-230-290 | 200-200-200-200 |

## Polymerisation

LLDPE components were prepared by the copolymerisation of ethylene with $\alpha$-olefin in a gas phase fluidized bed reactor under the general process settings disclosed in WO 06/085051.

The constrained geometry catalyst (A) disclosed in WO 2010/000557 was used for examples 1, 2 and 3.

A Ziegler-Natta catalyst (B) prepared according to the catalyst example disclosed in WO 2009/065677 was used for comparative examples C1 and C2.

A Ziegler-Natta catalyst (C) prepared according to example 24 of EP1652863 was used for comparative examples C3 and C4.

The powders exiting the polymerization reactor were compounded on a twin screw extruder in the presence of 0.8 g/kg of Irgafos™168 and 0.4 g/kg of Irganox™1010.

**TABLE 1 - Polymerisation conditions**

| **Example** | | **1** | **2** | **3** | **C1** | **C2** | **C3** | **C4** |
|---|---|---|---|---|---|---|---|---|
| Catalyst | | A | A | A | B | B | C | C |
| Reactor diameter | m | 5 | 0.74 | 0.74 | 5 | 5 | 5 | 5 |
| Temperature | °C | 74 | 80 | 80 | 97.5 | 82 | 82 | 85 |
| Bed height | m | 15.5 | 5.8 | 5.8 | 15.2 | 15.2 | 19.5 | 19.5 |
| Ethylene partial pressure | bar | 8.5 | 13 | 13.4 | 10.5 | 10 | 7.5 | 7.5 |

(continued)

| Example | | 1 | 2 | 3 | C1 | C2 | C3 | C4 |
|---|---|---|---|---|---|---|---|---|
| Hydrogen/ethylene ratio | bar/bar | 0.0062 | 0.0047 | 0.0041 | 0.148 | 0.175 | 0.28 | 0.306 |
| Hexene/ethylene ratio | bar/bar | 0.010 | 0.0035 | 0.003 | - | - | 0.149 | 0.130 |
| Butene/ethylene ratio | bar/bar | - | - | | 0.25 | 0.45 | - | - |
| Pentane partial pressure | bar | 2.2 | 2.5 | 2.8 | - | - | - | - |
| Hexane partial pressure | bar | - | - | | - | - | 0.08 | 0.2 |
| Residence time | h | 6 | 4 | 4.4 | 3.8 | 3.8 | 2.6 | 2.6 |
| Space time yield | $kg/h/m^3$ | 65 | 73 | 75 | 92 | 92 | 103 | 103 |

**TABLE 2 - Product properties of the base resin**

| Example | | 1 | 2 | 3 | C1 | C2 | C3 | C4 |
|---|---|---|---|---|---|---|---|---|
| $MI_2$ | g/ 10min | 5.0 | 5.1 | 6.0 | 4.2 | 2.4 | 2.8 | 3.1 |
| HLMI | g/ 10min | 103 | 108 | 134 | 113 | 68 | 86 | 87 |
| $HLMI/MI_2$ | | 20.8 | 21.1 | 22.3 | 26.8 | 28.8 | 30.6 | 28.3 |
| Density | $kg/m^3$ | 915.2 | 927.6 | 932.8 | 929.3 | 919.2 | 918.4 | 926.4 |
| Comonomer* | | C6 | C6 | C6 | C4 | C4 | C6 | C6 |
| $\eta_{100}$, at 190°C | Pa.s | 793 | 747 | 644 | 736 | 1030 | 928 | 888 |
| $\eta_0$, at 190°C (zero shear viscosity: ZSV) | Pa.s | 1619 | 1766 | 1567 | 2067 | 3710 | 3655 | 2996 |
| TREF CDBI | % | 83.9 | 75.1 | n/a | n/a | 42.8 | 25.3 | n/a |
| G'(G" = 500Pa) | Pa | 25 | 41.8 | 45.8 | 33.8 | 33.0 | 45.2 | 36 |
| Dow Rheological Index (DRI) | | 0.122 | 0.265 | 0.373 | 0.423 | 0.453 | 0.714 | 0.509 |
| Cpf | | 1.27 | 1.32 | 1.30 | 0.93 | 0.92 | 0.90 | 0.85 |
| Chlorine content | ppm | 5 | 4 | 5 | 17 | 23 | 15 | 14 |
| FlexMod | MPa | 204 | 566 | 743 | 555 | 314 | 354 | 480 |
| ***Tensile properties*** | | | | | | | | |
| Tensile stress at yield | MPa | 10.0 | 14.7 | 17.3 | 14.8 | 10.5 | 11.0 | 13.4 |
| Tensile strength at break | MPa | 18.7 | 24.0 | 25.1 | 20.2 | 17.7 | 17.7 | 18.7 |
| Elongation at break | % | 580 | 707 | 699 | 760 | 800 | 739 | 583 |
| *C4 is 1-butene and C6 is 1-hexene | | | | | | | | |

As depicted in the date of Table 2 and illustrated in Figure 1, the inventive compositions exhibit significantly higher tensile stress at break than the comparative resins of the same flexural modulus having lower CDBI and being based on conventional catalyst systems.

**TABLE 3 - Product properties after crosslinking**

| Example | | 1 | 2 | 3 | C1 | C2 | C3 | C4 |
|---|---|---|---|---|---|---|---|---|
| | | | | | | | | |
| Gel content | wt% | 73 | 66 | 59 | 68 | 72 | 74 | 72 |
| Tensile stress at yield | MPa | 9.0 | 14.0 | 16.8 | 14.1 | 10.2 | 10.6 | 13.1 |

(continued)

| Example | | 1 | 2 | 3 | C1 | C2 | C3 | C4 |
|---|---|---|---|---|---|---|---|---|
| Tensile stress at break | MPa | 20.8 | 22.2 | 26.2 | 15.3 | 18.1 | 17.9 | 20.3 |
| Elongation at break | % | 444 | 346 | 428 | 217 | 431 | 437 | 452 |

**TABLE 4 - cable extrusion**

| Extrusion run | | 1-a | 1-b | 2-a | 1-c |
|---|---|---|---|---|---|
| LLDPE base resin | | 1 | 1 | C1 | 1 |
| Extrusion conditions | | A | A | A | B |
| Cross-linking agent type* | | Dynasilan Silfin 53 | Dynasilan Silfin 53 | Dynasilan Silfin 53 | Silcat VS904 |
| Cross-linking agent concentration | wt% | 1.0 | 1.0 | 1.0 | 1.4 |
| Screw speed** | rpm | 48.7 | 65.8 | 61.3 | 43 |
| Line Speed** | m/min | 765 | 1055 | 767 | 1000 |
| Motor load | A | 194 | 204 | 190 | - |
| Melt temperature | °C | No thermocouple | No thermocouple | No thermocouple | 240 |
| Cable surface aspect | | Good | Good | Good | Good |
| * :DynasilanSilfin 53 was supplied by Evonik and Silcat VS904 was supplied by Momentive<br>* *: values reported for linear speed of extrusion are the maximum values achieved while keeping a smooth surface aspect as well as a regular and stable outer diameter | | | | | |

The advantages of the composition according to the invention are highlighted by the data in Table 4: the output rate can be increased by about 37% without any appearance of shark-ski or cable diameter instability (comparison of extrusion runs 1-b and 2-a). Alternatively, at a given extrusion rate of 765 m/min, the screw speed can be significantly reduced under constant motor load; this results in a reduction of energy consumption by about 30% (comparison of extrusion run 1-a with 2-a).

Moreover, since the normative requirements of wire and cables usually fix the thickness of the insulating layer, using a base resin having a lower density will reduce the amount of polyethylene materials in the final article to the benefit of environmental and economical savings. For instance, example 1-a having a lower density makes it possible to reduce by about 1.5 wt % the insulating layer compared to comparative example 2-a.

| **Properties of the coated layer** | | | | | |
|---|---|---|---|---|---|
| Extrusion run | | 1-a | 1-b | 2-a | 1-c |
| Tensile Modulus | MPa | 114 | 109 | 205 | - |
| ***Hot Set Test*** | | | | | |
| Elongation after 15min at 200°C | % | 75 | 105 | 52 | 30 |
| ***Tensile tests*** | | | | | |
| Tensile strength at break | MPa | 20.6 | 21.8 | 13.7 | 21.3 |
| Elongation at break | % | 507 | 532 | 468 | 406 |
| Tensile strength at break, after ageing* | MPa | 22.1 | 24.2 | 13.4 | - |
| Elongation at break, after ageing* | % | 497 | 526 | 440 | - |
| *: measured on the coated layer after cross-linking and ageing in an oven during 7 days at 135°C | | | | | |

Despite the lower density and the higher melt-index of LLDPE base resin 1 compared to LLDPE base resin

C1, the resulting cables still exhibit Hot Set Test lower than 200%, which is a general requirement for the wire and cable application. In addition, the results of the tensile tests performed on the same coated layer indicate a higher tensile strength at break of the coating layer obtained after cross-linking by peroxide/silane.

Without wishing to be bound by theory, the particular microstructure of the inventive composition (as illustrated, for instance, by a high Composition Distribution Breadth Index) is believed to have a significant and positive impact on the mechanical properties of both the base resin and the coating layer obtained after cross-linking by peroxide/silane.

## Claims

1. An insulating or a jacketing layer for wire or cable comprising as a base resin a copolymer of ethylene and alpha-olefin having the following properties as determined on said base resin prior to any reticulation or crosslinking:

    (i) a density in the range 0.912 to 0.936 g.cm$^{-3}$,
    (ii) a melt index (190°C/2.16 kg), $MI_2$ from 4 to 8 g/10min, and
    (iii) a comonomer distribution (CDBI) of > 60%;
    (iv) a melt index ratio ($I_{21}/I_2$) in the range 19 - 29.

2. An insulating or a jacketing layer according to claim 1 wherein the copolymer has a CDBI in the range 60 - 95% and preferably in the range 70 - 90%.

3. An insulating or a jacketing layer according to either of the preceding claims wherein the copolymer has a melt index ratio ($I_{21}/I_2$) in the range 19 - 27 and preferably in the range 20 - 25.

4. An insulating or a jacketing layer according to any of the preceding claims wherein the copolymer has a melt elastic modulus G'(G'=500 Pa) in the range 20 - 50 Pa, preferably in the range 22 - 46 Pa and most preferably in the range 22 - 32 Pa.

5. An insulating or a jacketing layer according to any of the preceding claims wherein the copolymer has a Dow Rheology Index (DRI) in the range 0.05 - 0.40, preferably in the range 0.10 - 0.35 and most preferably in the range 0.10 - 0.30.

6. An insulating or a jacketing layer according to any of the preceding claims wherein the copolymer exhibits a high shear rate viscosity $\eta^*_{100}$(190°C) lower than 800 Pas, preferably in the range 400 - 800 and most preferably in the range 600 - 800 Pas.

7. An insulating or a jacketing layer according to any of the preceding claims wherein the copolymer exhibit a comonomer partitioning function (Cpf) of > 1.0, preferably > 1.1, more preferably > 1.2 and most preferably in the range 1.2 - 1.6.

8. An insulating or a jacketing layer according to any of the preceding claims wherein the copolymer have a chlorine content less than 10 ppm by weight, and more preferably less than 6 ppm by weight.

9. An insulating or a jacketing layer according to any of the preceding claims wherein the copolymers are cross-linked.

10. An insulating or a jacketing layer according to claim 9 wherein the copolymers are crosslinked via a silane/peroxide grafting and cross-linking process.

11. An insulating or a jacketing layer according to claim 10 wherein the cross-linking process comprises a concentration of crosslinking agent in the range 0.1 to 2 wt% , preferably from 0.5 to 1.5 wt%, and most preferably from 0.7 to 1.4 wt%.

12. An insulating layer or jacketing layer according to claim 1 wherein the copolymer is prepared by use of a single site catalyst system.

13. An insulating layer or jacketing layer according to claim 12 wherein the single site catalyst system comprises a monocyclopentadienyl metallocene complex.

14. An insulating or jacketing layer according to any of the preceding claims wherein the copolymer is prepared by polymerising ethylene and alpha-olefin in a gas phase reactor.

**15.** An insulating layer or jacketing layer according to claim 14 wherein the copolymers are in powder form direct from the reactor without preliminary compounding step.

**16.** A cable having an insulating or jacketing layer according to any of the preceding claims.

**17.** A cable according to claim 16 for use in low and medium voltage applications.

**Patentansprüche**

**1.** Isolier- oder Mantelschicht für einen Draht oder ein Kabel, umfassend als ein Basisharz ein Copolymer von Ethylen und alpha-Olefin mit den folgenden Eigenschaften, die an dem Basisharz vor jeglicher Netzbildung oder Vernetzung bestimmt werden:

(i) eine Dichte im Bereich 0,912 bis 0,936 $g.cm^{-3}$,
(ii) ein Schmelzindex (190 °C/2, 16 kg), $MI_2$ von 4 bis 8 g/10 min, und
(iii) eine Comonomerverteilung (CDBI) > 60 %;
(iv) ein Schmelzindexverhältnis ($I_{21}/I_2$) im Bereich 19-29.

**2.** Isolier- oder Mantelschicht nach Anspruch 1, wobei das Copolymer einen CDBI im Bereich 60-95 % und vorzugsweise im Bereich 70-90 % aufweist.

**3.** Isolier- oder Mantelschicht nach einem der vorangehenden Ansprüche, wobei das Copolymer ein Schmelzindexverhältnis ($I_{21}/I_2$) im Bereich 19-27 und vorzugsweise im Bereich 20-25 aufweist.

**4.** Isolier- oder Mantelschicht nach einem der vorangehenden Ansprüche, wobei das Copolymer einen Schmelzelastizitätsmodul G'(G' = 500 Pa) im Bereich 20-50 Pa, vorzugsweise im Bereich 22-46 Pa und am meisten bevorzugt im Bereich 22-32 Pa aufweist.

**5.** Isolier- oder Mantelschicht nach einem der vorangehe Copolymer einen Dow Rheology Index (DRI) im Bereich Bereich 0,10-0,35 und am meisten bevorzugt im Bereich 0,1

**6.** Isolier- oder Mantelschicht nach einem der vorangehenden Ansprüche, wobei das Copolymer eine Viskosität bei hoher Schergeschwindigkeit $\eta^*_{100}$ (190 °C) von weniger als 800 Pas, vorzugsweise im Bereich 400-800 und am meisten bevorzugt im Bereich 600-800 Pas aufweist.

**7.** Isolier- oder Mantelschicht nach einem der vorangehenden Ansprüche, wobei das Copolymer eine Comonomerverteilungsfunktion (Cpf) > 1,0, vorzugsweise > 1,1, mehr bevorzugt > 1,2 und am meisten bevorzugt im Bereich 1,2-1,6 aufweist.

**8.** Isolier- oder Mantelschicht nach einem der vorangehenden Ansprüche, wobei das Copolymer einen Chlorgehalt von weniger als 10 Gewichts-ppm, und mehr bevorzugt weniger als 6 Gewichts-ppm aufweist.

**9.** Isolier- oder Mantelschicht nach einem der vorangehenden Ansprüche, wobei die Copolymere vernetzt sind.

**10.** Isolier- oder Mantelschicht nach Anspruch 9, wobei die Copolymere mittels eines Silan/Peroxid-Pfropf- und Vernetzungsverfahrens vernetzt sind.

**11.** Isolier- oder Mantelschicht nach Anspruch 10, wobei das Vernetzungsverfahren eine Konzentration eines Vernetzungsmittels im Bereich 0,1 bis 2 Gew.-%, vorzugsweise von 0,5 bis 1,5 Gew.-% und am meisten bevorzugt von 0,7 bis 1,4 Gew.-% umfasst.

**12.** Isolierschicht oder Mantelschicht nach Anspruch 1, wobei das Copolymer unter Verwendung eines Single-Site-Katalysatorsystems hergestellt wird.

**13.** Isolierschicht oder Mantelschicht nach Anspruch 12, wobei das Single-Site-Katalysatorsystem einen Monocyclopentadienyl-Metallocen-Komplex umfasst.

**14.** Isolier- oder Mantelschicht nach einem der vorangehenden Ansprüche, wobei das Copolymer durch Polymerisieren von Ethylen und alpha-Olefin in einem Gasphasenreaktor hergestellt wird.

**15.** Isolierschicht oder Mantelschicht nach Anspruch 14, wobei die Copolymere direkt aus dem Reaktor ohne vorhergehenden Compoundierschritt in Pulverform vorliegen.

**16.** Kabel mit einer Isolier- oder Mantelschicht nach einem der vorangehenden Ansprüche.

**17.** Kabel nach Anspruch 16 zur Verwendung in Nieder- und Mittelspannungsanwendungen.

## Revendications

**1.** Couche d'isolation ou de chemisage pour fil ou câble comprenant, en tant que résine de base, un copolymère d'éthylène et d'$\alpha$oléfine ayant les propriétés suivantes, telles que déterminées sur ladite résine de base avant toute réticulation ou rectification :

(i) une masse volumique située dans la plage allant de 0,912 à 0,936 g/cm$^3$,
(ii) un indice de fusion (190°C/2,16 kg) $MI_2$ de 4 à 8 g/10 min, et
(iii) une distribution des comonomères (CDBI) > 60 % ;
(iv) un rapport des indices de fusion ($I_{21}/I_2$) situé dans la plage allant de 19 à 29.

**2.** Couche d'isolation ou de chemisage selon la revendication 1, dans laquelle le copolymère a une CDBI située dans la plage allant de 60 à 95 % et de préférence dans la plage allant de 70 à 90 %.

**3.** Couche d'isolation ou de chemisage selon l'une ou l'autre des revendications précédentes, dans laquelle le copolymère a un rapport des indices de fusion ($I_{21}/I_2$) situé dans la plage allant de 19 à 27 et de préférence dans la plage allant de 20 à 25.

**4.** Couche d'isolation ou de chemisage selon l'une quelconque des revendications précédentes, dans laquelle le copolymère a un module élastique à l'état fondu G' (G' = 500 Pa) situé dans la plage allant de 20 à 50 Pa, de préférence dans la plage allant de 22 à 46 Pa et tout spécialement dans la plage allant de 22 à 32 Pa.

**5.** Couche d'isolation ou de chemisage selon l'une quelconque des revendications précédentes, dans laquelle le copolymère a un indice de rhéologie Dow (DRI) situé dans la plage allant de 0,05 à 0,40, de préférence dans la plage allant de 0,10 à 0,35 et tout spécialement dans la plage allant de 0,10 à 0,30.

**6.** Couche d'isolation ou de chemisage selon l'une quelconque des revendications précédentes, dans laquelle le copolymère présente une viscosité sous une vitesse de cisaillement élevée $\eta^*_{100}$ (190°C) inférieure à 800 Pa.s, de préférence située dans la plage allant de 400 à 800 Pa.s et tout spécialement dans la plage allant de 600 à 800 Pa.s.

**7.** Couche d'isolation ou de chemisage selon l'une quelconque des revendications précédentes, dans laquelle le copolymère présente une fonction de répartition des comonomères (Cpf) > 1,0, de préférence > 1,1, mieux encore > 1,2 et tout spécialement située dans la plage allant de 1,2 à 1,6.

**8.** Couche d'isolation ou de chemisage selon l'une quelconque des revendications précédentes, dans laquelle le copolymère a une teneur en chlore inférieure à 10 ppm en poids, et mieux encore inférieure à 6 ppm en poids.

**9.** Couche d'isolation ou de chemisage selon l'une quelconque des revendications précédentes, dans laquelle les copolymères sont réticulés.

**10.** Couche d'isolation ou de chemisage selon la revendication 9, dans laquelle les copolymères sont réticulés via un traitement de réticulation et de greffage de silane/peroxyde.

**11.** Couche d'isolation ou de chemisage selon la revendication 10, dans laquelle le traitement de réticulation comprend une concentration d'agent de réticulation située dans la plage allant de 0,1 à 2 % en poids, de préférence de 0,5 à 1,5 % en poids, et tout spécialement de 0,7 à 1,4 % en poids.

**12.** Couche d'isolation ou de chemisage selon la revendication 1, dans laquelle le copolymère est préparé par utilisation d'un système catalyseur à un seul site.

**13.** Couche d'isolation ou de chemisage selon la revendication 12, dans laquelle le système catalyseur à un seul site comprend un complexe de monocyclopentadiényle-métallocène.

**14.** Couche d'isolation ou de chemisage selon l'une quelconque des revendications précédentes, dans laquelle le copolymère est préparé par polymérisation d'éthylène et d'$\alpha$-oléfine dans un réacteur en phase gazeuse.

**15.** Couche d'isolation ou de chemisage selon la revendication 14, dans laquelle les copolymères sont sous la forme d'une poudre provenant directement du réacteur sans étape de combinaison préliminaire.

**16.** Câble ayant une couche d'isolation ou de chemisage selon l'une quelconque des revendications précédentes.

**17.** Câble selon la revendication 16, destiné à être utilisé dans des applications de basse et moyenne tension.

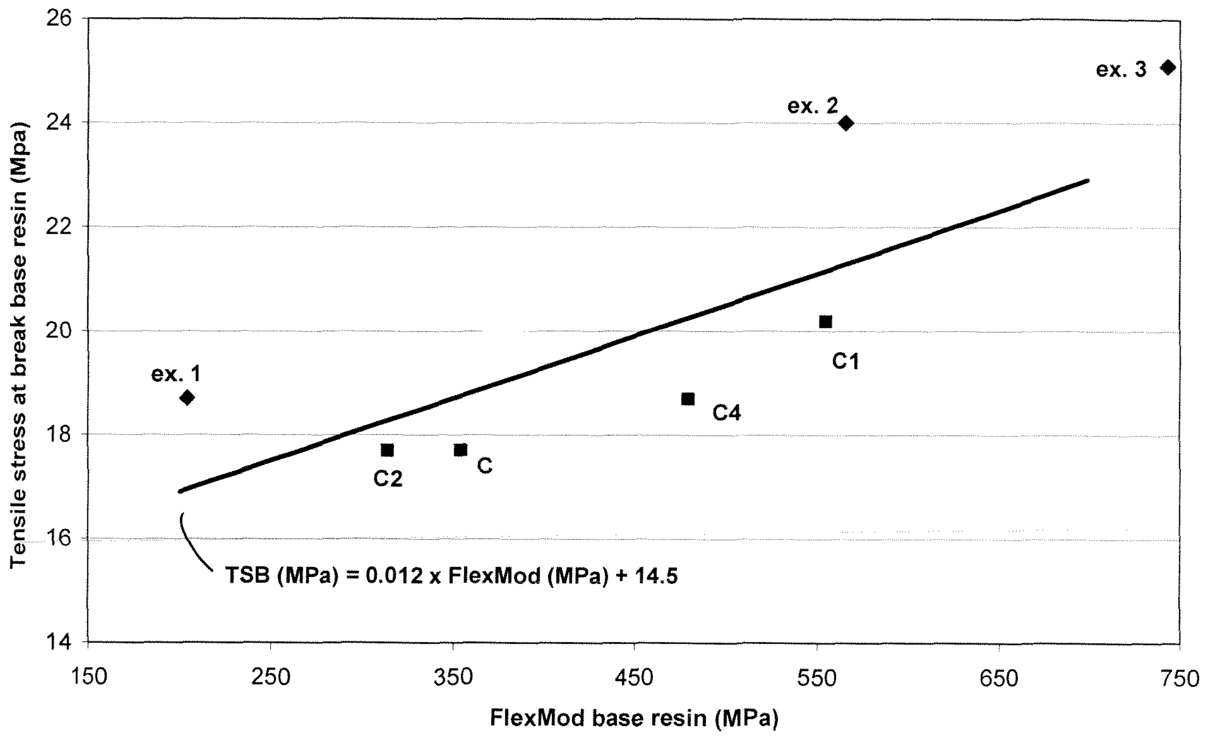
Tensile stress at break base resin (Mpa)
26
24
22
20
18
16
14
150
250
350
450
550
650
750
FlexMod base resin (MPa)
ex. 1
ex. 2
ex. 3
C1
C2
C
C4
TSB (MPa) = 0.012 x FlexMod (MPa) + 14.5

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6825253 B
- EP 1453866 A
- US 6534119 B
- US 20040024138 A
- US 6270856 B
- WO 2002085954 A
- US 20080106005 A
- US 5596392 A
- US 5962592 A
- WO 2006120418 A
- WO 2010000557 A
- WO 9744371 A
- EP 416815 A
- EP 418044 A
- EP 420436 A
- EP 551277 A
- WO 9500526 A
- WO 9827119 A
- WO 04020487 A
- WO 05019275 A
- EP 89691 A
- EP 699213 A
- US 6114486 A
- US 5206075 A
- WO 9303093 A
- WO 06085051 A
- WO 2009065677 A
- EP 1652863 A


### Non-patent literature cited in the description


- **S. LAI et al.** *Dow Rheology Index (DRI) for Insite(TM) Technology Polyolefins (ITP): Unique structure-Processing Relationships,* 1814-1815
- **WILD et al.** *J. Poly. Sci., Poly. Phys. Ed.,* 1982, vol. 20, 441